# FASCICULE DE BREVET EUROPEEN

(11) **EP 3 433 169 B1**
(45) Date de publication et mention de la délivrance du brevet: **15.04.2020**
(21) Numéro de dépôt: 17711221.6
(22) Date de dépôt: 20.03.2017
(51) Int. Cl.: B64C 27/72, B64C 27/50

(54) **HELICE D'AERONEF COMPRENANT DES PALES PLIABLES ET A CALAGE VARIABLE**
LUFTFAHRZEUGROTOR MIT FALTBAREN UND VERSTELLBAREN BLÄTTERN
AIRCRAFT ROTOR COMPRISING FOLDABLE BLADES WITH VARIABLE PITCH

(30) Priorité: 21.03.2016 FR 1652398
(43) Date de publication de la demande: 30.01.2019
(73) Titulaire: ARIANEGROUP SAS, 75015 Paris (FR)
(72) Inventeur: HERANGER, Christophe, 78700 Conflans Sainte Honorine (FR); PRAMPOLINI, Marco, 78240 Chambourcy (FR)
(74) Mandataire: Brevalex
(86) Numéro de dépôt international: PCT/EP2017/056512
(87) Numéro de publication internationale: WO 2017/162561

(56) Documents cités:
- WO-A1-2015/133980
- FR-A1- 2 140 108
- US-A1- 2004 118 970
- US-A1- 2010 072 325

## Description

### DOMAINE TECHNIQUE

L'invention se rapporte au domaine des hélices de moteur d'aéronef, en particulier les hélices commandées en rotation à vitesse sensiblement constante.

Elles s'appliquent à tout type d'aéronef, comme par exemple les drones.

### ETAT DE LA TECHNIQUE ANTERIEURE

De l'art antérieur, il est connu des hélices de moteur d'aéronef dont les pales présentent un caractère pliable, de manière à pouvoir être déplacées d'une position active déployée à une position de retrait, et inversement. Ce type de système est surtout répandu sur les avions de tourisme de petite taille, dans le but de pouvoir plier l'hélice une fois l'avion au sol. Cela permet de réduire l'encombrement de l'avion et de protéger son hélice. Une autre fonctionnalité peut résider dans le pliage de l'hélice au cours du vol, afin d'en diminuer la trainée induite. Le document US 2004/0118970 A1 montre le préambule de la revendication 1.

En outre, sur les avions de plus grande taille, il est connu de prévoir des pales d'hélice montées pivotantes sur le moyeu afin de permettre leur calage en incidence. En effet, la variation de l'angle d'incidence des pales au cours d'un vol permet de s'adapter à chaque instant aux besoins en poussée sans modifier les paramètres de ce vol, et tout en conservant une vitesse de rotation sensiblement constante de l'hélice.

Néanmoins, aucune solution technique n'a encore été proposée pour associer les deux fonctionnalités précitées au sein d'une même hélice, à savoir offrir un calage variable des pales tout en les rendant pliables. Il existe donc un besoin allant en ce sens.

### EXPOSÉ DE L'INVENTION

L'invention a donc pour but de répondre au moins partiellement au besoin identifié ci-dessus.

Pour ce faire, l'invention a pour objet une hélice pour moteur d'aéronef destinée à être mise en rotation selon un axe de rotation d'hélice, l'hélice comprenant un moyeu ainsi qu'une pluralité de pales réparties circonférentiellement autour du moyeu, et comprenant en outre :
- un support de pale associé à chaque pale, ledit support de pale étant monté pivotant sur ledit moyeu selon un axe de calage en incidence ;
- des moyens de commande en incidence des pales configurés pour faire pivoter ledit support de pale relativement au moyeu, selon ledit axe de calage en incidence ;
- une liaison pivotante entre chaque support de pale et le pied de sa pale associée, la liaison pivotante permettant un pivotement de la pale relativement à son support de pale selon un axe de pliage de pale ;
- associé à au moins l'une des pales, un organe de commande de pliage / dépliage de pale configuré pour faire pivoter ledit pied de pale relativement au support de pale selon ledit axe de pliage, ledit organe de commande de pliage / dépliage comprenant un premier élément et un second élément mobiles à translation l'un par rapport à l'autre, le premier élément étant monté sur ledit moyeu à l'aide d'une première liaison pivot et le second élément étant monté sur un dispositif de transmission à l'aide d'une seconde liaison pivot, le dispositif de transmission étant raccordé sur ledit pied de pale ;
- un dispositif passif de synchronisation de pliage / dépliage des pales, comportant un élément central de synchronisation monté rotatif relativement au moyeu selon ledit axe de rotation d'hélice, ainsi qu'un élément de raccord associé à chaque pale, ledit élément de raccord comportant une première extrémité montée sur ledit pied de pale selon une première liaison rotule, ainsi qu'une seconde extrémité montée sur ledit élément central de synchronisation à l'aide d'une seconde liaison rotule.

L'invention est remarquable en ce qu'elle permet de répondre au besoin identifié ci-dessus, d'une manière astucieuse, simple et performante. En particulier, la mise en œuvre des liaisons pivots/rotules permet d'introduire des degrés de liberté de mouvement utiles pour l'accompagnement du pivotement des pales, lors de leur calage en incidence. De même, ces liaisons pivots/rotules sont utiles pour la cinématique de pliage / dépliage des pales, mouvement au cours duquel l'élément central de synchronisation tourne librement autour du moyeu selon l'axe de rotation de l'hélice. A cet égard, il est noté que le dispositif passif de synchronisation permet non seulement d'éviter l'apparition de balourds durant les mouvements de pliage / dépliage, mais permet également de prévoir un nombre d'organes de commande de pliage / dépliage inférieur au nombre de pales de l'hélice.

L'invention est aussi remarquable en ce qu'elle présente une conception qui peut être mise en œuvre sur les hélices existantes à calage variable des pales, sans entraîner de modifications importantes.

En outre, elle permet d'envisager un dépliage des pales avec l'hélice déjà en rotation, ou avec l'hélice à l'arrêt.

Enfin, elle s'adapte aussi bien aux hélices montées en configuration de poussée (dite « pusher »), dans laquelle les pales se plient vers l'arrière, qu'aux hélices montées en configuration de traction (dite « puller ») dans laquelle les pales se plient vers l'avant.

L'invention présente par ailleurs au moins l'une quelconque des caractéristiques optionnelles suivantes, prises isolément ou en combinaison.

L'hélice comprend au moins deux organes de commande de pliage / dépliage de pale, respectivement associés à deux pales. Comme évoqué précédemment, le nombre de ces organes de commande peut être inférieur au nombre de pales, mais peut être alternativement identique à ce dernier. A titre d'exemple, le nombre d'organes de commande est de moitié inférieur à celui des pales de l'hélice. Egalement à titre d'exemple, il est noté qu'un unique organe de commande de pliage / dépliage pourrait être associé à toutes les pales de l'hélice.

De préférence, ledit organe de commande de pliage / dépliage de pale est un vérin commandé, de préférence un vérin hydraulique. Le vérin peut être commandé en modes « pusher » ou « puller », en fonction de la conception de l'hélice. De plus, il est noté qu'en mode « puller », le vérin peut remplir la fonction d'amortisseur.

De préférence, chaque élément de raccord est une bielle.

De préférence, ledit élément central de synchronisation est un anneau.

De préférence, ledit dispositif de transmission comprend deux maillons articulés l'un sur l'autre.

De préférence, l'axe de pliage de pale et l'axe de calage en incidence sont sensiblement orthogonaux.

De préférence, le nombre de pales est compris entre une et quatre, même si un nombre supérieur pourrait être prévu, sans sortir du cadre de l'invention.

De préférence, l'organe de commande de pliage / dépliage est orienté sensiblement parallèlement à l'axe de rotation d'hélice lorsque les pales se trouvent dans une position active déployée.

L'invention a également pour objet un moteur d'aéronef comportant une hélice telle que décrite ci-dessus, de préférence configuré de manière à ce que cette hélice tourne à vitesse sensiblement constante selon son axe de rotation. Néanmoins, il est indiqué de façon conventionnelle, la vitesse de rotation de l'hélice peut être commandée à une vitesse légèrement inférieure par le pilote, à des fins d'optimisation de la poussée ou de la consommation de carburant, selon la mission.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure la représente une vue schématique en perspective d'une hélice selon l'invention, dans une position active déployée ;
- la figure 1b est une vue schématique de côté de l'hélice montrée sur la figure la ;
- la figure 2a est une vue analogue à celle de la figure 1a, avec l'hélice représentée dans une position proche de la position de retrait ;
- la figure 2b est une vue analogue à celle de la figure 1b, avec l'hélice représentée dans une position proche de la position de retrait ; et
- la figure 3 est une vue partielle en perspective de l'hélice montrée sur la figure 1a, et représentée de manière plus détaillée.

### EXPOSÉ DÉTAILLÉ DE MODES DE RÉALISATION PRÉFÉRÉS

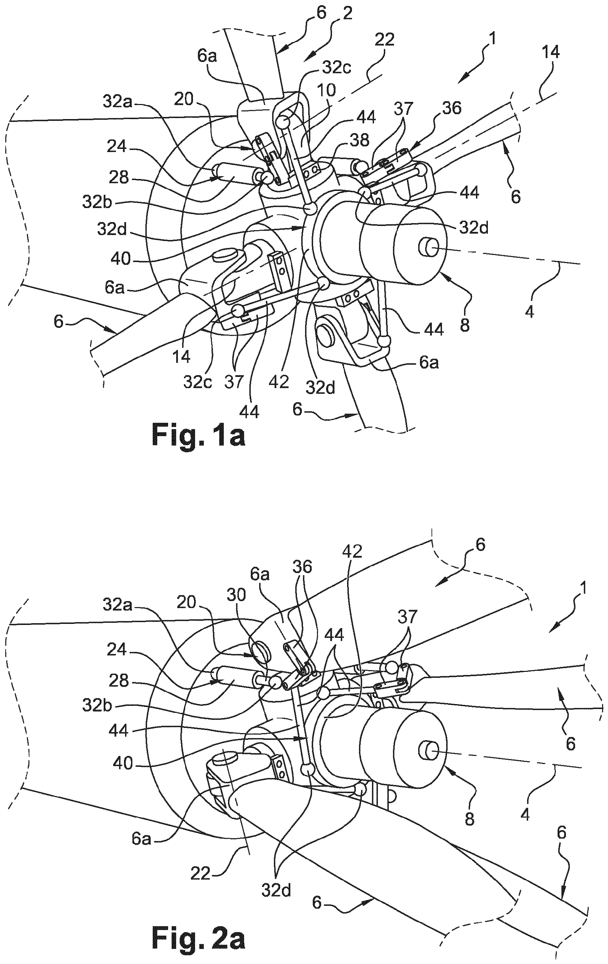

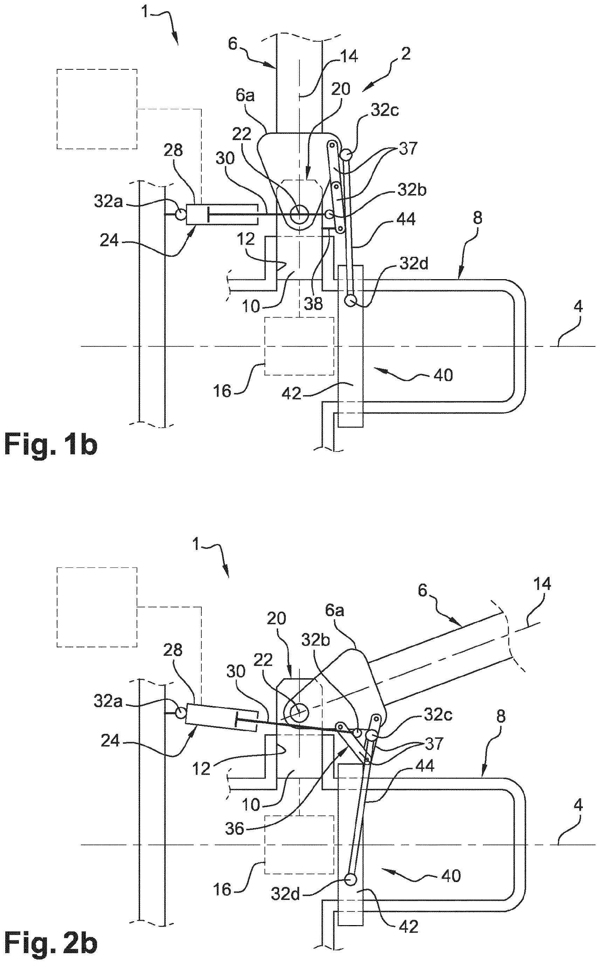

En référence tout d'abord aux figures 1a et 1b, il est représenté une hélice 2 pour un moteur 1 d'aéronef, par exemple un moteur pour drone. Il s'agit de préférence d'un moteur adapté pour un véhicule d'une masse de l'ordre de cinq tonnes, et dont l'hélice 2 est destinée à être mise en rotation à vitesse sensiblement constante selon son axe de rotation d'hélice 4, par exemple à une vitesse maximale de l'ordre de 2000 tours/min. Pour ce faire, le moteur 1 est classiquement équipé d'un système de commande (non représenté), permettant d'ordonner une variation de l'incidence des pales de l'hélice afin de maintenir sa vitesse de rotation constante, quels que soient les besoins en puissance requis.

L'hélice 2 comporte une pluralité de pales 6, ici présentes au nombre de quatre régulièrement réparties circonférentiellement autour de l'axe de rotation 4. Ces pales 6 sont portées extérieurement par un moyeu d'hélice 8, monté mobile à rotation selon l'axe 4 par rapport à une partie fixe du moteur.

L'invention présente la particularité d'offrir une conception permettant non seulement le calage en incidence de ses pales 6, mais également le pilage / dépliage de ses pales entre une position active déployée telle que montrée sur les figures 1a et 1b, et une position de retrait ou position pliée, proche de celle montrée sur les figures 2a et 2b.

Toujours en référence aux figures 1a et 1b, l'hélice 2 comprend un support de pale 10 associé à chaque pale. Ce support 10 est agencé radialement en relation avec l'axe de rotation 4, et traverse une ouverture 12 du moyeu 8. Le support de pale 10 est monté pivotant dans cette ouverture 12 du moyeu, selon un axe de calage en incidence 14 qui est sensiblement orienté radialement. Comme cela a été montré schématiquement sur la figure 1b, chaque support de pale 10 coopère de façon connue avec des moyens 16 de commande en incidence des pales, logés à l'intérieur du moyeu 8. Ces moyens 16 sont configurés pour faire pivoter simultanément chaque support de pale 10 dans son ouverture 12, selon son axe de calage en incidence 14. Ce pivotement est réalisé en réponse à un ordre du système de commande du moteur, visant à modifier l'angle de calage des pales 6 de l'hélice.

En outre, chaque pale 6 comporte une partie aérodynamique ainsi qu'une base formant un pied de pale 6a. Celui-ci prend la forme d'une chape articulée sur son support de pale associé 10, grâce à une liaison pivotante 20. Cette liaison définit un axe de pilage de pale 22, d'orientation sensiblement tangentielle relativement à l'axe de rotation 4, en étant donc sensiblement orthogonal à ce dernier. Par conséquent, la liaison pivotante 20 permet un pivotement de la pale 6 relativement à son support de pale 10, selon l'axe de pliage de pale 22 aussi sensiblement orthogonal à l'axe de calage en incidence 14. A cet égard, il est noté que le pliage des pales est ici prévu pour que celles-ci basculent vers l'avant, puisque le moteur présente une configuration de traction (dite « puller ») dans laquelle l'hélice est montée à l'avant du générateur de gaz. Néanmoins, une configuration inversée (dite « pusher ») pourrait être adoptée sans sortir du cadre de l'invention. Dans ce cas, les pales sont prévues pour se plier vers l'arrière.

Pour réaliser le pliage / dépliage de l'hélice, il est prévu au moins un organe 24 de commande de pliage / dépliage de pale associé à une pale 6. Par exemple, seulement deux des quatre pales 6 sont équipées d'un tel organe de commande 24, même si le nombre de ces organes pourrait être inférieur ou supérieur, sans sortir du cadre de l'invention.

L'organe de commande de pliage / dépliage de pale 24 est configuré pour faire pivoter le pied de pale 6a relativement au support de pale 10, selon l'axe de pliage 22. Il s'agit préférentiellement d'un vérin hydraulique commandé, comprenant un corps de vérin 28 ainsi qu'une tige de vérin 30 mobiles à translation l'un par rapport à l'autre. En position active déployée telle que montrée sur les figures la et 1b, l'organe de commande 24 est orienté sensiblement parallèlement à l'axe de rotation 4 de l'hélice.

Le corps de vérin 28 est monté sur une partie arrière du moyeu 8 à l'aide d'une première liaison pivot 32a, tandis que la tige de vérin 30 est montée sur un dispositif de transmission 36 à l'aide d'une seconde liaison pivot 32b. Plus précisément, le dispositif de transmission 36 comporte deux maillons 37 articulés l'un sur l'autre, et dont l'un est également articulé sur le pied de pale 6a, et dont l'autre est articulé sur une ferrure 38 solidaire en rotation du support de pale 10. Les trois axes d'articulation sont ici parallèles entre eux, et également parallèles à l'axe de pliage de pale 22.

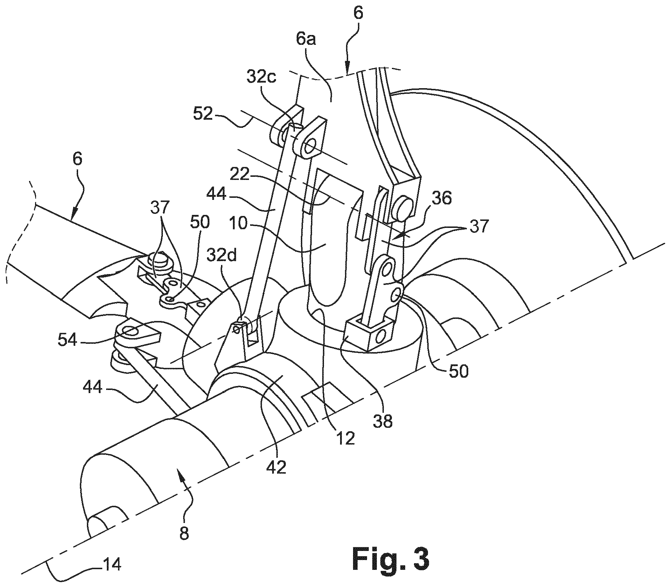

Les deux maillons 37 se succèdent selon la direction radiale, en étant agencés extérieurement au moyeu 8. Le maillon situé radialement vers l'intérieur présente un œillet (référencé 50 sur la figure 3) de raccordement à la tige de vérin 30, au niveau duquel est réalisée la seconde liaison pivot 32b.

A titre indicatif, il est noté que les axes supportant les première et seconde liaisons pivots 32a, 32b sont préférentiellement parallèles à l'axe de pliage de pale 22.

Enfin, l'hélice 2 comporte un dispositif passif 40 de synchronisation de pliage / dépliage des pales 6. Ce dispositif 40 comportant tout d'abord un élément central de synchronisation 42 en forme d'anneau, agencée autour de la partie avant du moyeu 8. Cet anneau 42 est bloqué en translation selon l'axe de rotation d'hélice 4, et s'avère uniquement mobile à rotation selon ce même axe 4, relativement au moyeu 8. Il comprend aussi un élément de raccord 44 associé à chaque pale 6, de préférence en forme de bielle. Sa première extrémité est montée sur le pied de pale 6a selon une première liaison rotule 32c, et sa seconde extrémité est montée sur l'anneau central de synchronisation 42 à l'aide d'une seconde liaison rotule 32d. Chaque bielle 44 s'étend sensiblement vers l'avant, et présente un angle selon la direction radiale lorsqu'elle est regardée en vue de face. Comme cela est visible sur la figure 3 plus détaillée mais sur laquelle les organes de commande ont été retirés pour plus de clarté, les axes supportant les première et seconde liaisons rotules 32c, 32d sont préférentiellement orthogonales entre elles. En effet, l'axe supportant la première liaison rotule 32c, dont l'orientation est symbolisée par la ligne pointillée 52, est parallèle à l'axe de pliage de pale 22, tandis que l'axe supportant la seconde liaison rotule 32d, dont l'orientation est symbolisée par la ligne pointillée 54, est parallèle à l'axe de rotation 4 de l'hélice.

Avec la conception décrite ci-dessus, en cas de variation d'incidence commandée par les moyens 16, chaque support de pale 10 pivote selon son axe 14 relativement au moyeu 8. Ce pivotement est accompagné par un déplacement des vérins 24 et des bielles 44, grâce aux liaisons pivots/rotules 32a-32d. De plus, lors du mouvement des bielles 44, celui-ci peut être accompagné d'une faible rotation de l'anneau 42 autour du moyeu 8, selon l'axe 4.

Lorsqu'un pliage de l'hélice est commandé, les organes de commande 24 sont actionnés en conséquence jusqu'à ce que les pales 6 atteignent leur position de retrait proche de celle montrée sur les figures 2a et 2b. Ici, il s'agit d'un déploiement du vérin 24, dont la tige de vérin 30 conduit le maillon radialement intérieur à pivoter vers l'avant, en entraînant avec lui l'autre maillon qui pousse à son tour le pied de pale 6 à pivoter vers l'avant selon l'axe 22. Les deux maillons 37 passent ainsi d'une configuration où ils sont sensiblement alignés radialement, à une configuration dans laquelle ils forment un V ouvert vers l'arrière. Il est noté que la conception retenue peut être telle qu'en position dépliée, les deux maillons 37 peuvent adopter une position dans laquelle ils sont légèrement inclinés l'un par rapport à l'autre, de façon à former un V très évasé et surtout de sens inverse par rapport au V précité, ouvert vers l'arrière. Cela permet d'empêcher le retour accidentel des pales en position pliée.

Le pivotement des pales 6 s'effectue selon un angle proche de 90°, de sorte que leur orientation initialement radiale bascule progressivement jusqu'à devenir sensiblement axiale. Au cours de ce pivotement des pales 6, la première extrémité de chaque bielle 44 est entraînée vers l'avant, tandis que ce déplacement est compensé par la rotation de l'anneau 42 autour du moyeu 8, provoqué par le déplacement induit de la seconde extrémité de chaque bielle 44. A cet égard, il est indiqué qu'il est préférentiellement prévu un jeu fonctionnel sur chaque bielle pour éviter toute boucle hyperstatique entre le dispositif de synchronisation et les moyens de commande en incidence des pales situé à l'intérieur du rotor.

L'écartement des secondes extrémités des bielles 44 sur l'anneau 42 étant régulier, le pliage de l'hélice 2 s'effectue avantageusement de manière synchronisée. Bien entendu, le pliage de l'hélice 2 vers l'avant doit s'opposer à la force aérodynamique s'appliquant sur les pales 6 en vol, que l'hélice tourne ou qu'elle soit à l'arrêt.

Pour le dépliage de l'hélice 2, les principes décrits ci-dessus se réalisent dans le sens inverse. A cet égard, il est noté que le dépliage / déploiement peut s'effectuer alors que l'hélice tourne, ou bien avec l'hélice à l'arrêt. Dans le premier cas, la force centrifuge aide avantageusement au déploiement.

Bien entendu, diverses modifications peuvent être apportées par l'homme du métier à l'invention qui vient d'être décrite, uniquement à titre d'exemples non limitatifs.

## Revendications

1. Hélice (2) pour moteur d'aéronef (1) destinée à être mise en rotation selon un axe de rotation d'hélice (4), l'hélice comprenant un moyeu (8) ainsi qu'une pluralité de pales (6) réparties circonférentiellement autour du moyeu, l'hélice comprend en outre :
- un support de pale (10) associé à chaque pale, ledit support de pale étant monté pivotant sur ledit moyeu (8) selon un axe de calage en incidence (14) ;
- des moyens de commande en incidence (16) des pales configurés pour faire pivoter ledit support de pale (10) relativement au moyeu (8), selon ledit axe de calage en incidence (14) ;
- une liaison pivotante (20) entre chaque support de pale (10) et le pied (6a) de sa pale associée, la liaison pivotante permettant un pivotement de la pale (6) relativement à son support de pale (10) selon un axe de pliage de pale (22) ;
- associé à au moins l'une des pales (6), un organe (24) de commande de pliage / dépliage de pale configuré pour faire pivoter ledit pied de pale (6a) relativement au support de pale (10) selon ledit axe de pliage (22), ledit organe de commande de pliage / dépliage (24) comprenant un premier élément (28) et un second élément (30) mobiles à translation l'un par rapport à l'autre, le premier élément (28) étant monté sur ledit moyeu (8) à l'aide d'une première liaison pivot (32a) et le second élément (30) étant monté sur un dispositif de transmission (36) à l'aide d'une seconde liaison pivot (32b), le dispositif de transmission étant raccordé sur ledit pied de pale (6a) ; **caractérisé en ce que** l'hélice comprend
un dispositif passif (40) de synchronisation de pliage / dépliage des pales, comportant un élément central de synchronisation (42) monté rotatif relativement au moyeu (8) selon ledit axe de rotation d'hélice (4), ainsi qu'un élément de raccord (44) associé à chaque pale (6), ledit élément de raccord (44) comportant une première extrémité montée sur ledit pied de pale (6a) selon une première liaison rotule (32c), ainsi qu'une seconde extrémité montée sur ledit élément central de synchronisation (42) à l'aide d'une seconde liaison rotule (32d).

2. Hélice selon la revendication 1, **caractérisée en ce qu'**elle comprend au moins deux organes de commande de pliage / dépliage de pale (24), respectivement associés à deux pales (6).

3. Hélice selon l'une quelconque des revendications précédentes, **caractérisée en ce que** ledit organe de commande de pliage / dépliage de pale (24) est un vérin commandé.

4. Hélice selon l'une quelconque des revendications précédentes, **caractérisée en ce que** chaque élément de raccord (44) est une bielle.

5. Hélice selon l'une quelconque des revendications précédentes, **caractérisée en ce que** ledit élément central de synchronisation (42) est un anneau.

6. Hélice selon l'une quelconque des revendications précédentes, **caractérisée en ce que** ledit dispositif de transmission (36) comprend deux maillons (37) articulés l'un sur l'autre.

7. Hélice selon l'une quelconque des revendications précédentes, **caractérisée en ce que** ledit axe de pliage de pale (22) et ledit axe de calage en incidence (14) sont sensiblement orthogonaux.

8. Hélice selon l'une quelconque des revendications précédentes, **caractérisée en ce que** le nombre de pales (6) est compris entre une et quatre.

9. Hélice selon l'une quelconque des revendications précédentes, **caractérisée en ce que** l'organe de commande de pliage / dépliage (24) est orienté sensiblement parallèlement à l'axe de rotation d'hélice (4) lorsque les pales (6) se trouvent dans une position active déployée.

10. Moteur d'aéronef (1) comportant une hélice (2) selon l'une quelconque des revendications précédentes.

11. Moteur selon la revendication 10, **caractérisé en ce qu'**il est configuré de manière à ce que son hélice (2) tourne à vitesse sensiblement constante selon son axe de rotation (4).

## Patentansprüche

1. Propeller (2) für einen Luftfahrzeugmotor (1), der dazu bestimmt ist, um eine Propellerdrehachse (4) gedreht zu werden, wobei der Propeller eine Nabe (8) und eine Vielzahl von Flügeln (6) umfasst, die umfänglich um die Nabe herum verteilt sind, wobei der Propeller ferner enthält:
- einen jedem Flügel zugeordneten Flügelträger (10), wobei der Flügelträger um eine Anstellachse (14) verschwenkbar an der Nabe (8) gelagert ist;
- Mittel (16) zum Steuern der Anstellung der Flügel, die dazu ausgelegt sind, den Flügelträger (10) relativ zur Nabe (8) um die Anstellachse (14) zu verschwenken;
- eine Schwenkverbindung (20) zwischen jedem Flügelträger (10) und dem Fuß (6a) des zugehörigen Flügels, wobei die Schwenkverbindung ein Verschwenken des Flügels (6) relativ zu seinem Flügelträger (10) um eine Flügelfaltachse ermöglicht (22);
- zumindest einem der Flügel (6) zugeordnet ein Steuerorgan (24) zum Falten/Entfalten der Flügel, das dazu ausgelegt ist, den Flügelfuß (6a) relativ zum Flügelträger (10) um die Faltachse (22) zu verschwenken, wobei das Steuerorgan (24) zum Falten/Entfalten ein erstes Element (28) und ein zweites Element (30) umfasst, die relativ zueinander verschiebbar sind, wobei das erste Element (28) an der Nabe (8) mittels einer ersten Schwenkverbindung (32a) und das zweite Element (30) an einer Übertragungsvorrichtung (36) mittels einer zweiten Schwenkverbindung (32b) gelagert ist, wobei die Übertragungsvorrichtung mit dem Flügelfuß (6a) verbunden ist;
**dadurch gekennzeichnet, dass** der Propeller enthält:
- eine passive Vorrichtung (40) zum Synchronisieren des Faltens/Entfaltens der Flügel, die ein zentrales Synchronisationselement (42) enthält, das relativ zur Nabe (8) um die Propellerdrehachse (4) drehbar gelagert ist, sowie ein jedem Flügel (6) zugeordnetes Verbindungselement (44), wobei das Verbindungselement (44) ein erstes Ende, das mittels einer ersten Kugelgelenkverbindung (32c) am Flügelfuß (6a) gelagert ist, sowie ein zweites Ende, das mittels einer zweiten Kugelgelenkverbindung (32d) am zentralen Synchronisationselement (42) gelagert ist, enthält.

2. Propeller nach Anspruch 1,
**dadurch gekennzeichnet, dass**
er zumindest zwei Steuerorgane (24) zum Falten/Entfalten der Flügel enthält, die zwei jeweiligen Flügeln (6) zugeordnet sind.

3. Propeller nach einem der vorangehenden Ansprüche,
**dadurch gekennzeichnet, dass**
das Steuerorgan (24) zum Falten/Entfalten der Flügel ein steuerbarer Kraftzylinder ist.

4. Propeller nach einem der vorangehenden Ansprüche,
**dadurch gekennzeichnet, dass**
das Verbindungselement (44) jeweils eine Steuerstange ist.

5. Propeller nach einem der vorangehenden Ansprüche,
**dadurch gekennzeichnet, dass**
das zentrale Synchronisationselement (42) ein Ring ist.

6. Propeller nach einem der vorangehenden Ansprüche,
**dadurch gekennzeichnet, dass**
die Übertragungsvorrichtung (36) zwei gelenkig miteinander verbundene Glieder (37) enthält.

7. Propeller nach einem der vorangehenden Ansprüche,
**dadurch gekennzeichnet, dass**
die Flügelfaltachse (22) und die Anstellachse (14) im Wesentlichen orthogonal verlaufen.

8. Propeller nach einem der vorangehenden Ansprüche,
**dadurch gekennzeichnet, dass**
die Anzahl der Flügel (6) zwischen eins und vier liegt.

9. Propeller nach einem der vorangehenden Ansprüche,
**dadurch gekennzeichnet, dass**
das Steuerorgan (24) zum Falten/Entfalten der Flügel im Wesentlichen parallel zur Flügeldrehachse (4) ausgerichtet ist, wenn die Flügel (6) sich in einer ausgefahrenen, aktiven Stellung befinden.

10. Luftfahrzeugmotor (1) mit einem Propeller (2) nach einem der vorangehenden Ansprüche.

11. Motor nach Anspruch 10,
**dadurch gekennzeichnet, dass**
er so ausgelegt ist, dass sich dessen Propeller (2) mit im Wesentlichen konstanter Drehzahl um seine Drehachse (4) dreht.

## Claims

1. A propeller (2) for an aircraft engine (1) for being rotated about a propeller axis of rotation (4), the propeller comprising a hub (8) as well as a plurality of blades (6) circumferentially distributed about the hub, the propeller further comprises:
- a blade support (10) associated with each blade, said blade support being pivotably mounted on said hub (8) about an incidence pitch axis (14);
- incidence control means (16) for the blades configured to pivot said blade support (10) relative to the hub (8), about said incidence pitch axis (14);
- a pivoting connection (20) between each blade support (10) and the root (6a) of its associated blade, the pivot connection enabling the blade (6) to be pivoted relative to its blade support (10) about a blade folding axis (22);
- associated with at least one of the blades (6), a blade folding/unfolding control member (24) configured to pivot said blade root (6a) relative to the blade support (10) about said folding axis (22), said folding/unfolding control member (24) comprising a first element (28) and a second element (30) translationally movable with respect to each other, the first element (28) being mounted on said hub (8) using a first pin joint (32a) and the second element (30) being mounted on a transmission device (36) using a second pin joint (32b), the transmission device being connected to said blade root (6a); **characterized in that** the propeller comprises:
- a blade folding/unfolding synchronization passive device (40), including a central synchronization element (42) rotatably mounted relative to the hub (8) about said propeller axis of rotation (4), as well as a connector element (44) associated with each blade (6), said connector element (44) including a first end mounted on said blade root (6a) about a first ball joint (32c), as well as a second end mounted on said central synchronization element (42) using a second ball joint (32d).

2. The propeller according to claim 1, **characterized in that** it comprises at least two blade folding/unfolding control members (24), respectively associated with two blades (6).

3. The propeller according to any of the preceding claims, **characterized in that** said blade folding/unfolding control member (24) is a controlled cylinder.

4. The propeller according to any of the preceding claims, **characterized in that** each connector element (44) is a connecting rod.

5. The propeller according to any of the preceding claims, **characterized in that** said central synchronization element (42) is a ring.

6. The propeller according to any of the preceding claims, **characterized in that** said transmission device (36) comprises two links (37) hinged to each other.

7. The propeller according to any of the preceding claims, **characterized in that** said blade folding axis (22) and said incidence pitch axis (14) are substantially orthogonal.

8. The propeller according to any of the preceding claims, **characterized in that** the number of blades (6) is between one and four.

9. The propeller according to any of the preceding claims, **characterized in that** the folding/unfolding control member (24) is oriented substantially parallel to the propeller axis of rotation (4) when the blades (6) lie in an active spread out position.

10. An aircraft engine (1) including a propeller (2) according to any of the preceding claims.

11. An engine according to claim 10, **characterized in that** it is configured such that its propeller (2) rotates at a substantially constant speed about its axis of rotation (4).
